(19) Europäisches Patentamt

European Patent Office

Office européen des brevets

(11) **EP 1 226 660 B1**

(12) **EUROPÄISCHE PATENTSCHRIFT**

(45) Veröffentlichungstag und Bekanntmachung des Hinweises auf die Patenterteilung:
**02.03.2005   Patentblatt 2005/09**

(51) Int Cl.⁷: **H04B 3/23**

(21) Anmeldenummer: 00984956.3

(22) Anmeldetag: **03.11.2000**

(86) Internationale Anmeldenummer:
**PCT/EP2000/010854**

(87) Internationale Veröffentlichungsnummer:
**WO 2001/033730 (10.05.2001 Gazette 2001/19)**

(54) **ECHOKOMPENSATIONSVORRICHTUNG**

ECHO COMPENSATION DEVICE

DISPOSITIF DE COMPENSATION D'ECHO

(84) Benannte Vertragsstaaten:
**DE FR GB**

(30) Priorität: **05.11.1999  DE 19953347**

(43) Veröffentlichungstag der Anmeldung:
**31.07.2002   Patentblatt 2002/31**

(73) Patentinhaber: **Infineon Technologies AG**
**81669 München (DE)**

(72) Erfinder:
• **SINGERL, Peter**
**A-9500 Villach (AT)**
• **STRÄUSSNIGG, Dietmar**
**A-9500 Villach (AT)**

• **SCHENK, Heinrich**
**81476 München (DE)**

(74) Vertreter: **Banzer, Hans-Jörg, Dipl.-Ing.**
**Kraus & Weisert**
**Patent- und Rechtsanwälte**
**Thomas-Wimmer-Ring 15**
**80539 München (DE)**

(56) Entgegenhaltungen:
**DE-A- 19 820 690          US-A- 5 446 728**

• **PATENT ABSTRACTS OF JAPAN vol. 1996, no. 03, 29. März 1996 (1996-03-29) & JP 07 303067 A (N T T IDOU TSUUSHINMOU KK), 14. November 1995 (1995-11-14)**

**Beschreibung**

Die vorliegende Erfindung betrifft eine Echokompensationsvorrichtung nach dem Oberbegriff des Anspruches 1, insbesondere eine Echokompensationsvorrichtung für ein Duplex-Übertragungssystem mit unsymmetrischen Datenraten in beiden Übertragungsrichtungen.

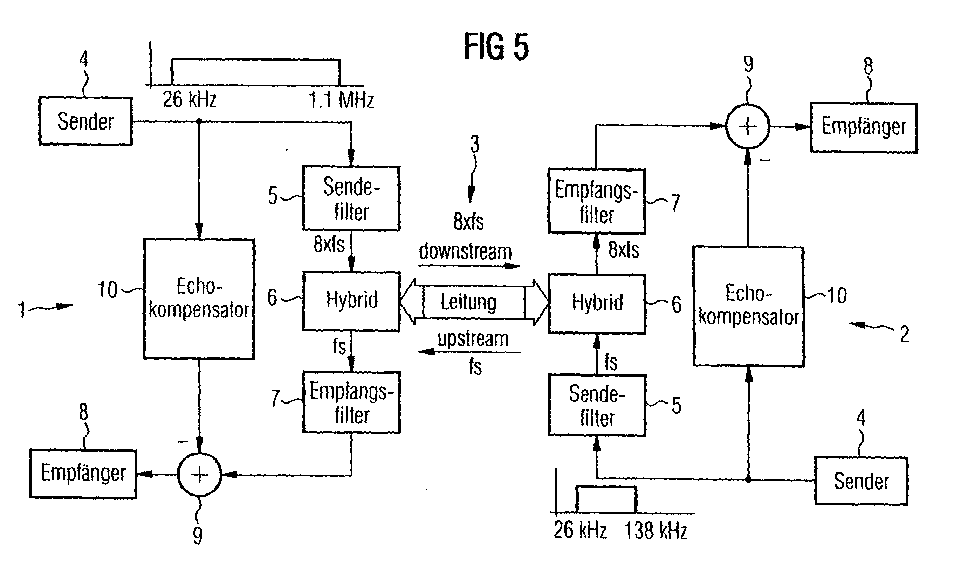

In Fig. 5 ist die prinzipielle Anordnung eines Duplex-Übertragungssystems dargestellt, bei dem gleichzeitig in beide Richtungen eines Übertragungskanals, z.B. einer Zweidrahtleitung, Daten übertragen werden. Das in Fig. 5 gezeigte Duplex-Übertragungssystem umfaßt eine zentrale Kommunikationseinheit 1, die einem Telefondienstanbieter oder Service Provider zugeordnet ist, sowie eine Kommunikationseinheit 2, die einem Teilnehmer zugeordnet ist. Jede Kommunikationseinheit weist einen Sender 4 zum Senden von digitalen Daten auf, die über ein Sendefilter 5 und eine auch als Hybrid-Schaltung bezeichnete Anschalteinrichtung 6 über eine Übertragungsleitung 3 an die jeweils andere Kommunikationseinheit übertragen werden, wo sie wiederum von der entsprechenden Hybrid-Schaltung 6 empfangen und über ein Empfangsfilter 7 einem Empfänger 8 zugeführt werden. Die Übertragungsrichtung von der zentralen Kommunikationseinheit 1 zu der Teilnehmer-Kommunikationseinheit 2 wird als "Downstream"-Richtung und die entgegengesetzte Richtung als "Upstream"-Richtung bezeichnet.

Überlappen sich die in beide Richtungen gesendeten Signalspektren, wird von einem Frequenz-Gleichlageverfahren gesprochen. In diesem Fall lassen sich die von dem Sender 4 einer Kommunikationseinheit über die jeweilige Hybrid-Schaltung 6 auf den Empfänger 8 derselben Kommunikationseinheit eingekoppelten störenden Echos, die durch ein Übersprechen des Sendesignals auf das Empfangssignal hervorgerufen werden, nicht durch selektive Filter unterdrücken, wie dies prinzipiell bei Frequenz-Getrenntlageverfahren möglich ist. Frequenz-Getrenntlageverfahren benötigen jedoch eine größere Signalbandbreite und sind daher meist weniger effektiv als Frequenz-Gleichlageverfahren.

In einem Übertragungssystem mit Frequenz-Gleichlageverfahren wird daher ein Echokompensator 10 zur Unterdrückung der störenden Echoeffekte eingesetzt. Dabei wird auf bestimmte Art und Weise ein Signal generiert, welches möglichst gut mit dem störenden Sende- oder Übersprechsignal übereinstimmt. Das von dem Echokompensator 10 generierte Echokompensationssignal wird anschließend über einen Addierer 9 von dem Empfangssignal, welches sich aus dem Echosignal und dem eigentlichen Nutzsignal der Gegenseite zusammensetzt, subtrahiert.

Da das Echosignal sehr stark vom Eingangswiderstand des Übertragungskanals 3 abhängt, muß sich die Echokompensation zu Beginn des Verbindungsaufbaus automatisch einstellen und während der Datenverbindung bei Veränderungen der Kanaleigenschaften, z.B. infolge von Temperaturschwankungen, adaptiv nachstellen. Eine Möglichkeit zur Realisierung des Echokompensators 10 besteht somit in der Ausgestaltung in Form eines nichtrekursiven digitalen Filters, dessen Filterkoeffizienten kontinuierlich in Abhängigkeit von dem echokompensierten Empfangssignal, d.h. dem Ausgangssignal des jeweiligen Addierers 9, eingestellt werden und unmittelbar die zeitlich begrenzte zeit- und wertdiskrete Impulsantwort des Echokompensators 10 darstellen. Die Filterkoeffizienten entsprechen somit der Echoimpulsantwort.

Die zuvor beschriebene Struktur des Echokompensators 10 ist insbesondere dann eine hinsichtlich der Realisierung günstige Struktur, wenn das Eingangssignal des Echokompensators, welches dem digitalen Sendesignal entspricht, nur sehr wenige Amplitudenstufen besitzt, da in diesem Fall auf die Realisierung von echten Multiplizierern für die Multiplikation der Signalabtastwerte mit den Filterkoeffizienten verzichtet werden kann. Diese Struktur wird daher insbesondere in Basisband-Übertragungssystemen, wie zum Beispiel in einem ISDN-Teilnehmeranschluß, verwendet.

Besitzt das digitale Sendesignal eine seiner Wortlänge entsprechende relativ große Anzahl von Amplitudenstufen, wie es beispielsweise in ADSL-Übertragungssystemen (Asymmetric Digital Subscriber Line) der Fall ist, müssen hingegen echte Multiplizierer zur Realisierung des nichtrekursiven digitalen Filters, welcher den Echokompensator 10 bildet, verwendet werden. Der Realisierungsaufwand für den Echokompensator hängt dann im wesentlichen von der Länge der zu kompensierenden Echoimpulsantwort und somit von der Anzahl der Filterkoeffizienten ab. Da die Anzahl der Filterkoeffizienten bei ADSL-Übertragungssystemen im Bereich von 300 bis 600 liegen kann, ist daher die zuvor beschriebene Struktur des Echokompensators nicht für moderne ADSL-Übertragungssysteme geeignet.

Aus der US-PS 5,311,759 ist eine weitere Struktur eines Echokompensators für die sogenannte Diskrete Multiton Modulation (DMT) bekannt, die auch in ADSL-Übertragungssystemen eingesetzt werden kann. Dabei wird vorgeschlagen, den Echokompensator in zwei Stufen aufzuteilen, wobei die erste Stufe im Frequenzbereich arbeitet und den vom periodischen Teil des jeweiligen Sendesignals herrührenden Anteil des Echosignals kompensiert, während die zweite Stufe im Zeitbereich arbeitet und den Einschwinganteil des Echosignals kompensiert. Mit dieser Struktur kann die Gesamtkomplexität des Echokompensators im Vergleich zu einem ausschließlich im Zeitbereich arbeitenden Echokompensator in Form eines nichtrekursiven Filters reduziert werden. Allerdings erfordert diese Struktur, wie beschrieben, auch eine im Frequenzbereich arbeitende Stufe.

In vielen Anwendungen ist es hinsichtlich der Unterdrückung von Echoeffekten auch bereits ausreichend, wenn in beide Übertragungsrichtungen mit unsymmetrischen Datenraten gearbeitet wird, so daß Daten beispielsweise von der zentralen Kommunikationseinheit 1, d.h. dem Service Provider, zu der Teilnehmer-Kommunikationseinheit 2 mit einer hohen Datenrate und in umgekehrter Richtung mit einer niedrigen Datenrate übertragen werden. Im ADSL-Standard ist ein derartiges unsymmetrisches Übertragungssystem beschrieben und spezifiziert. In Fig. 5 sind die Signalbandbreiten der beiden Sender 4 für ein derartiges ADSL-Übertragungssystem dargestellt. Trotz der unterschiedlichen Signalbandbreiten arbeiten die Sender 4 und Empfänger 8 auf beiden Seiten des Übertragungskanals 3 taktsynchron, d.h. die Abtastfrequenz des digital erzeugten Downstream-Sendesignals ist exakt um den Faktor acht größer als die Abtastfrequenz des Upstream-Sendesignals.

Aus der Druckschrift US 5,446,728 A ist eine Echokompensationsvorrichtung bekannt, welche einen Echokompensator zur Erzeugung eines digitalen Echokompensationssignals in Abhängigkeit von einem digitalen Sendesignal und Signalkombiniermittel zur Kombination des Echokompensationssignals mit einem digitalen Empfangssignal, um somit ein echokompensiertes Empfangssignal zu erhalten, umfasst. Vor dem Echokompensator ist eine erste digitale Filtereinrichtung zur Filterung des Sendesignals und nach dem Echokompensator eine zweite digitale Filtereinrichtung zur Filterung des Echokompensationssignals vorhanden.

Der vorliegenden Erfindung liegt die Aufgabe zugrunde, eine Echokompensationsvorrichtung für Übertragungssysteme, die in beiden Übertragungsrichtungen mit unsymmetrischen Datenraten arbeiten, bereitzustellen, wobei die Echokompensationsvorrichtung ausschließlich im Zeitbereich arbeitet und eine zuverlässige Kompensation von Echoeffekten bei einem gegenüber dem Stand der Technik geringeren Realisierungsaufwand ermöglicht.

Diese Aufgabe wird erfindungsgemäß durch eine Echokompensationsvorrichtung für Übertragungssysteme mit in Senderichtung um einen bestimmten Faktor höheren Datenraten als in Empfangsrichtung gemäß Anspruch 1 und durch eine Echokompensationsvorrichtung für Übertragungssysteme mit in Empfangsrichtung um einen bestimmten Faktor höheren Datenraten als in Senderichtung gemäß Anspruch 5 gelöst. Die Unteransprüche definieren jeweils vorteilhafte und bevorzugte Ausführungsformen der vorliegenden Erfindung.

Die vorliegende Erfindung beruht auf der Erkenntnis, daß die zur Erzielung einer bestimmten Restechodämpfung erforderliche Impulsantwort des Echokompensators deutlich reduziert werden kann, wenn in den Kompensationssignalpfad, d.h. den über den Echokompensator führenden Signalpfad, und/oder in den Empfangssignalpfad ein oder mehrere digitale Filter eingefügt werden.

Wird das Sendesignal mit einer gegenüber dem jeweiligen Empfangssignal höheren Abtastfrequenz oder Datenrate gesendet, wie es beispielsweise in ADSL-Übertragungssystemen in der dem Service Provider zugeordneten Kommunikationseinheit der Fall ist, wird durch geeignete Dezimierungsstufen am Ein- und Ausgang des adaptiven Echokompensators sowie durch Einfügen spezieller fester, d.h. nichtadaptiver, digitaler Filter vor der ersten und nach der zweiten Dezimierungsstufe die Länge der Impulsantwort des Echokompensators verkürzt.

Wird das Empfangssignal mit einer gegenüber dem jeweiligen Sendesignal um einen bestimmten Faktor (insbesondere um den Faktor acht) höheren Abtastfrequenz abgetastet, wie es beispielsweise in ADSL-Übertragungssystemen in der einem Teilnehmer zugeordneten Kommunikationseinheit der Fall ist, muß am Ausgang des Echokompensators das Echokompensationssignal mit einer entsprechend hohen Abtastfrequenz generiert werden. Dies kann beispielsweise durch Verwendung eines nichtrekursiven Filters erfolgen, welches eine dem bestimmten Faktor entsprechende Anzahl von unterschiedlichen Koeffizientensätzen enthält, wobei für jeden Abtastwert je Sendesymbol ein Koeffizientensatz vorgesehen ist, so daß insgesamt eine Interpolationsstufe gebildet wird. Durch Einfügen geeigneter digitaler Filter vor und nach dem somit realisierten adaptiven Echokompensator kann auch in diesem Fall die erforderliche Impulsantwort des Echokompensators verkürzt und somit der Realisierungsaufwand reduziert werden.

Ebenso wird für den Fall, daß das Empfangssignal mit einer gegenüber dem Sendesignal höheren Abtastfrequenz oder Datenrate vorliegt, die Datenrate des Sendesignals durch Interpolation erhöht, wobei dies stufenweise mit Hilfe eines vor dem Echokompensator und eines nach dem Echokompensator angeordneten Interpolators erfolgt. Das Differenzsignal zwischen dem Empfangssignal und dem Ausgangssignal des dem Echokompensator nachgeschalteten Interpolators, d.h. das dem Interpolationsfehler entsprechende Fehlersignal, wird zur Einstellung des in der Regel als adaptives nichtrekursives Filter ausgestalteten Echokompensators verwendet.

Die Erfindung wird nachfolgend anhand bevorzugter Ausführungsbeispiele unter Bezugnahme auf die beigefügte Zeichnung näher erläutert.

Fig. 1 zeigt eine Echokompensationsvorrichtung gemäß einem ersten Ausführungsbeispiel der vorliegenden Erfindung,

Fig. 2A-2C zeigen Darstellungen zur Verdeutlichung der mit dem in Fig. 1 gezeigten Ausführungsbeispiel erzielbaren Vorteile,

Fig. 3 zeigt eine Echokompensationsvorrichtung gemäß einem zweiten Ausführungsbeispiel der vorliegenden Erfindung,

Fig. 4A zeigt den Frequenzgang eines bei dem in Fig. 3 dargestellten Ausführungsbeispiel zusätzlich oder alternativ im Empfangssignalpfad einsetzbaren digitalen Filters,

Fig. 4B zeigt eine Darstellung zur Verdeutlichung der mit dem in Fig. 3 gezeigten Ausführungsbeispiel erzielbaren Vorteile,

Fig. 5 zeigt eine schematische Darstellung eines Duplex-Übertragungssystems, auf welches die vorliegende Erfindung anwendbar ist,

Fig. 6 zeigt eine mögliche Struktur für einen Echokompensator gemäß dem Stand der Technik,

Fig. 7A und 7B zeigen Darstellungen zur Verdeutlichung von Nachteilen, die mit der in Fig. 6 gezeigten Struktur verbunden sind,

Fig. 8 zeigt eine mögliche Struktur für einen Echokompensator gemäß der vorliegenden Erfindung,

Fig. 9A und 9B zeigen Darstellungen zur Verdeutlichung von Nachteilen, die mit einer weiterer bekannter. Echokompensatorstruktur verbunden sind, und

Fig. 10 zeigt eine Echokompensationsvorrichtung gemäß einem dritten Ausführungsbeispiel der vorliegenden Erfindung.

Der vorliegenden Erfindung liegt die Erkenntnis zugrunde, daß durch Einfügen spezieller Teilfiltersysteme in den Kompensationspfad des Echokompensators die für eine bestimmte Restechodämpfung erforderliche Filterlänge, d.h. die Anzahl der Filterkoeffizienten des in Form eines nichtrekursiven Filters ausgestalteten Echokompensators, verkürzt werden kann. Bei zusätzlichem oder alternativem Einfügen eines Teilfiltersystems in den Empfangssignalpfad kann der Realisierungsaufwand weiter reduziert werden, wobei in diesem Fall neben dem Echosignal auch das von der Gegenseite übertragene Nutzsignal beeinflußt wird, so daß hier zu prüfen ist, ob dies ohne Beeinträchtigung des Nutzsignals möglich ist.

Da die Erfindung in unsymmetrischen Übertragungssystemen, d.h. Übertragungssystemen mit in beiden Übertragungsrichtungen unterschiedlichen Datenraten, einsetzbar sein soll, müssen die Echokompensatorstrukturen der beiden Seiten des Übertragungssystems getrennt betrachtet werden.

Bei dem in Fig. 5 gezeigten ADSL-Übertragungssystem wird auf der Upstream-Empfangsseite, d.h. auf der Seite der Kommunikationseinheit 1, das schmalbandigere Datensignal empfangen, während das breitbandigere Datensignal gesendet wird. Bei Realisierung des Echokompensators 10 dieser Kommunikationseinheit im Zeitbereich muß demzufolge das Ausgangssignal des Echokompensators 10 unterabgetastet werden, um anschließend mit Hilfe des Addierers 9 von dem entsprechenden Empfangssignal subtrahiert werden zu können. Bei einem dem ADSL-Standard entsprechenden Übertragungssystem beträgt das Verhältnis zwischen der Senderabtastfrequenz und der Empfängerabtastfrequenz z.B. 8 : 1 (2208kHz : 276kHz).

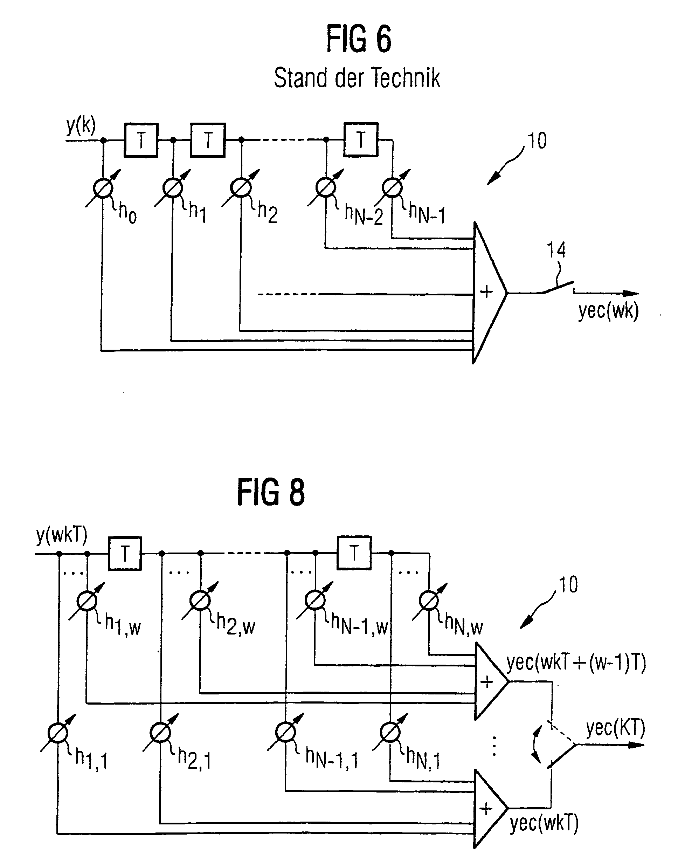

Eine entsprechende herkömmliche Echokompensatorstruktur gemäß dem Stand der Technik ist in Fig. 6 dargestellt. Der Echokompensator 10 ist, wie bereits erwähnt worden ist, in Form eines nichtrekursiven Filters der Länge N mit Filterkoeffizienten $h_0...h_{N-1}$ ausgestaltet, dessen Ausgangssignal mit einem Unterabtaster oder einer Dezimierungsstufe 14 entsprechend dem Verhältnis 8 : 1 unterabgetastet wird.

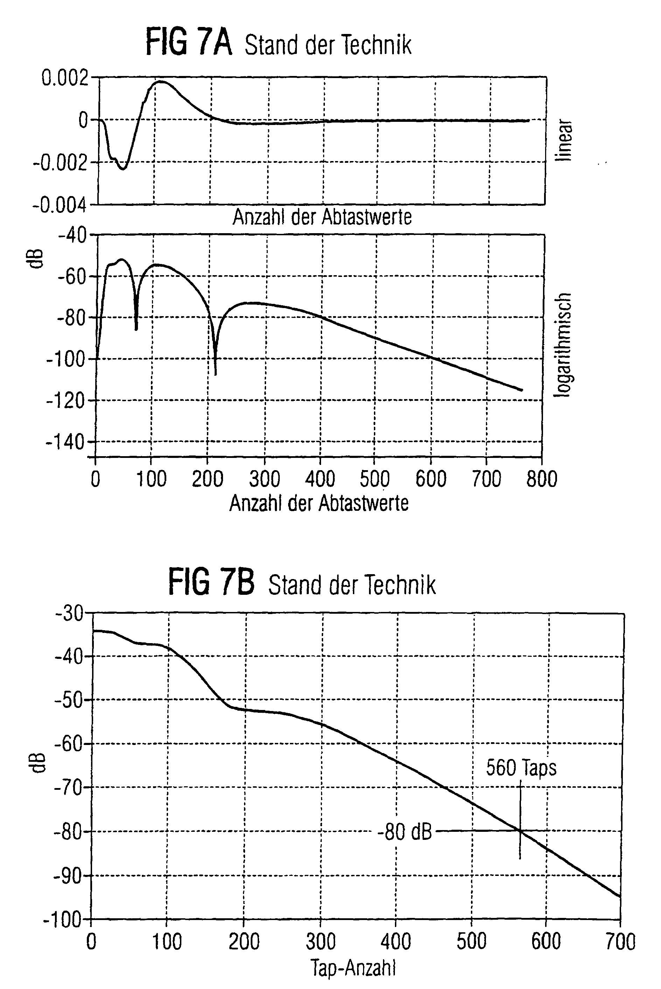

In Fig. 7A ist eine typische Echoimpulsantwort im linearen und logarithmischen (dB) Maßstab dargestellt. Aus Fig. 7A ist ersichtlich, daß die Echoimpulsantwort erst nach sehr vielen Taktperioden abgeklungen ist.

Eine quantitative Aussage über die Restechodämpfung in Abhängigkeit von der Länge des Echokompensators 10 bzw. der Anzahl der Koeffizienten des Echokompensators kann erhalten werden, wenn die quadratischen Werte der Echoimpulsantwort ab der Länge des Echokompensators 10 aufsummiert werden, da nur diese einen Beitrag zum Restecho liefern. In Fig. 7B ist diesbezüglich die Restechodämpfung in Abhängigkeit von der Anzahl der Koeffizienten des Echokompensators 10 dargestellt. Aus Fig. 7B ist ersichtlich, daß zur Erzielung einer Restechodämpfung von beispielsweise -80dB (was etwa einem Quantisierungsfehler eines 14Bit-A/D-Wandler entspricht) ein herkömmlicher Echokompensator mit 560 Filterkoeffizienten (Taps) erforderlich wäre.

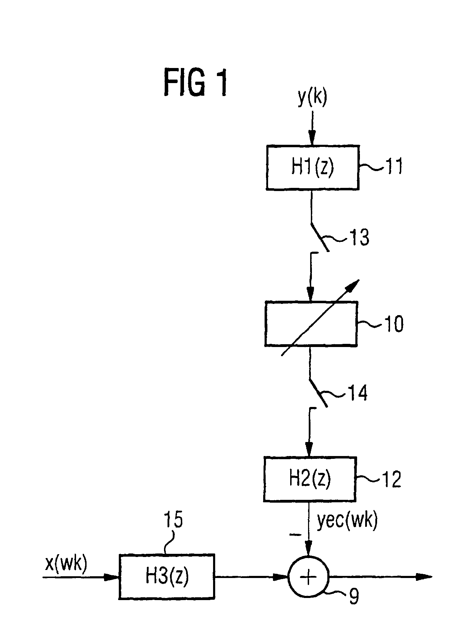

Eine drastische Reduzierung der für eine bestimmte Restechodämpfung erforderlichen Länge des Echokompensators 10 kann dagegen mit der in Fig. 1 gezeigten Echokompensationsvorrichtung erzielt werden, bei der in den Echokompensationspfad digitale Filter 11 und 12 eingefügt sind. Im Prinzip können für die Filter 11 und 12 beliebige Filter verwendet werden, wobei jedoch stets angestrebt wird, die für eine bestimmte Restechodämofung erforderliche Länge des Echokompensators 10 möglichst gering zu halten. Darüber hinaus ist es sinnvoll, die Filter 11 und 12 derart auszugestalten, daß ihre Filterkoeffizienten Zweierpotenzen entsprechen, so daß die Multiplikationen mit den Zweierpotenzen durch einfache Bit-Verschiebeoperation realisiert werden können und keine aufwendigen Hardware-Multiplizierer erforderlich sind.

Nach dem ersten digitalen Filter 11 mit der Übertragungsfunktion H1(z), dem das jeweilige Sendesignal y(k) zugeführt wird, ist ein erster Unterabtaster 13 mit einem Abtastverhältnis von beispielsweise 4 : 1 eingefügt, so daß die Eingangsdaten mit einer wesentlich geringeren Abtastfrequenz auf den adaptiven und daher variablen Echokompensator 10 gegeben werden, was sich schließlich in einer geringeren Anzahl an notwendigen Koeffizienten des Echokompensators 10 auswirkt. Am Ausgang des Echokompensators 10 befindet sich ein weiterer Unterabtaster 14 mit einem Abtastverhältnis von beispielsweise 2 : 1, so daß die Abtastfrequenz der Abtastwerte das Echokompensationssignals yec(wk) mit w = 8 insgesamt von 2,2MHz auf 276kHz reduziert wird und somit mit der Abtastfrequenz des Empfangssignals x(wk) übereinstimmt. Wegen der nichtrekursiven Realisierung des adaptiven Echokompensators müssen daher nur diese Abtastwerte berechnet werden.

Durch eine geeignete Dimensionierung des digitalen Filters 12, der mit der Taktfrequenz des Empfangssignals x(wk) arbeitet, kann die für den Echokompensator 10 erforderliche Koeffizientenanzahl weiter reduziert werden. Mit Hilfe von Simulationen wurden für die beiden digitalen Filter 11 und 12 die folgenden Übertragungsfunktionen ermittelt, mit denen die Impulsantwort des adaptiven Echokompensators 10 erheblich reduziert werden kann:

$$H1(z) \approx \left( \cfrac{1}{1 - \left(\cfrac{5}{8}\right) \cdot z^{-1}} \right)^{6}$$

$$H2(z) = \left( \cfrac{1}{1 - \left(1 - \cfrac{1}{16} - \cfrac{1}{64}\right) \cdot z^{-1}} \right)$$

Eine weitere Reduzierung der Anzahl der beispielsweise für eine Restechodämpfung von -80dB erforderlichen Koeffizienten des Echokompensators 10 kann erzielt werden, wenn zusätzlich in den Empfangssignalpfad ein weiteres digitales Filter 15 angeordnet wird, welches wie die digitalen Filter 11 und 12 Hochpaßcharakter aufweist und dessen Filterkoeffizienten vorzugsweise durch Zweierpotenzen darstellbar sind.

Für das digitale Filter 15 kann beispielsweise ein nichtrekursives Filter mit der Übertragungsfunktion

$$H3(z) = H_{NREK}(z) = (1 - z^{-1})^{n}$$

verwendet werden. Ebenso ist die Verwendung eines rekursiven Filters mit der Übertragungsfunktion

$$H3(z) = H_{REK}(z) = \frac{H_{NREK}(z)}{\left(1 - c_0 \cdot z^{-1}\right)^{m}} \quad \text{mit} \quad c_0 = \pm\left(1 - 2^{-L}\right)$$

verwendet werden, wobei L ganzzahlig ist. Wird m = n gewählt, erhält man für das rekursive Filter die Übertragungsfunktion

$$H3(z) = H_{REK}(z) = \left( \frac{1 - z^{-1}}{1 - c_0 \cdot z^{-1}} \right)^{n}$$

Bei Wahl eines mehrstufigen digitalen Filters ist es natürlich auch möglich, die Rückkopplungskoeffizienten

$c_0$ verschieden zu dimensionieren. Allgemein erhält man für die Übertragungsfunktion des im Zeitbereich arbeitenden digitalen Filters 15 den Ausdruck:

$$H3(z) = \prod_{v=1}^{n}\left(\frac{1-z^{-1}}{1-c_v \cdot z^{-1}}\right) \quad \text{mit} \quad c_v = \pm\left(1-2^{-L_v}\right)$$

Nachfolgend werden insbesondere die folgenden vier Übertragungsfunktionen des digitalen Filters 15 betrachtet, um die Wirksamkeit dieses digitalen Vorfilters in Bezug auf die Reduzierung der Länge des Echokompensators 10 zu zeigen:

$$H3(z) = \left(1-z^{-1}\right)$$

$$H3(z) = \left(\frac{1-z^{-1}}{1-0{,}5\cdot z^{-1}}\right)^{2}$$

$$H3(z) = \left(\frac{1-z^{-1}}{1-0{,}25\cdot z^{-1}}\right)^{2}$$

$$H3(z) = \left(1-z^{-1}\right)^{2}$$

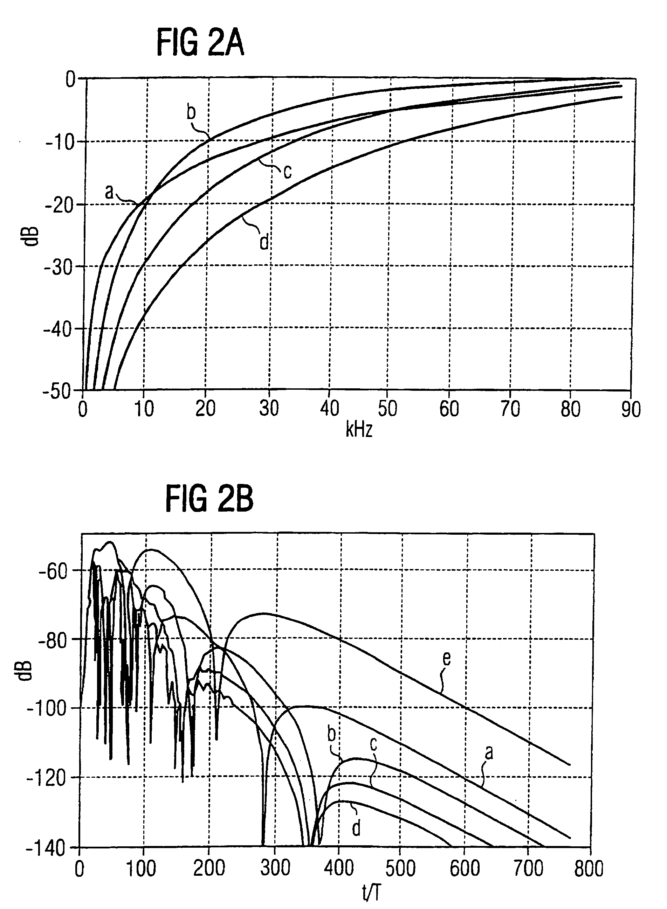

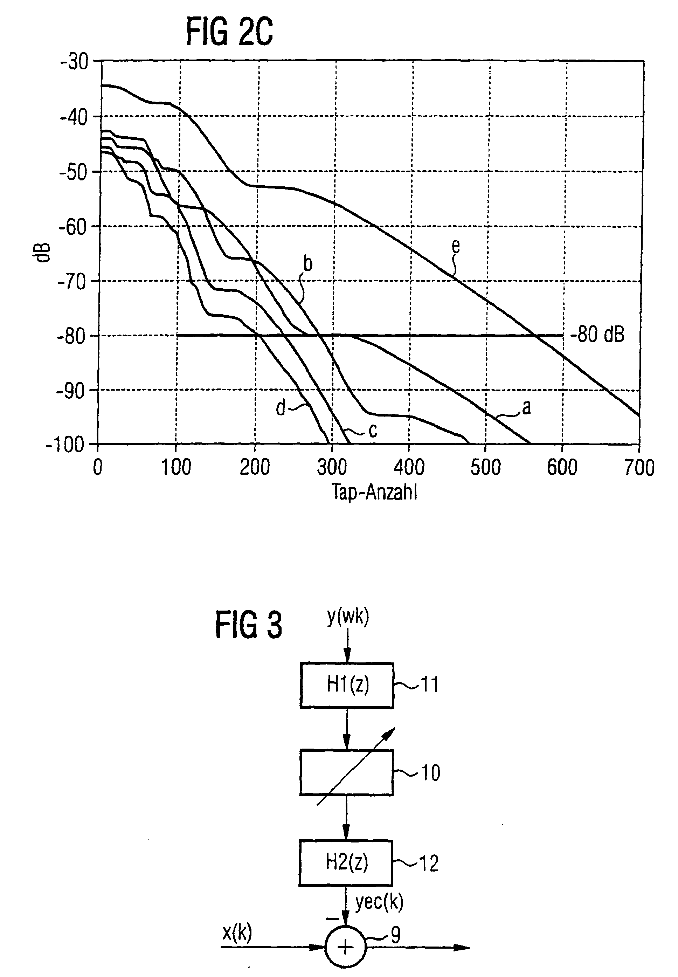

In Fig. 2A sind mit den Kennlinien a-d die Dämpfungsverläufe dieser Filter in der oben angegebenen Reihenfolge bei einer Abtastfrequenz von 276kHz in dem in Fig. 1 gezeigten Empfangssignalpfad aufgetragen. Bei der Wahl eines speziellen digitalen Vorfilters zur Eingangsfilterung des Empfangssignals x(wk) ist zu beachten, daß das Frequenzspektrum des Emp fangssignals x(wk) im Bereich zwischen ca. 26kHz und 138kHz liegt.

In Fig. 2B sind im logarithmischen Maßstab mit den Kennlinien a-d die jeweils entsprechenden Echoimpulsantworten bei Verwendung der obigen digitalen Vorfilter 15 im Empfangssignalpfad dargestellt, wobei Fig. 2B entnommen werden kann, daß für jeden der digitalen Vorfilter 15 eine beträchtliche Verkürzung der Echoimpulsantwort gegenüber der Kennlinie e erzielt werden kann, wobei die Kennlinie e dem Fall ohne Verwendung eines digitalen Vorfilters 15 entspricht.

In Fig. 2C ist für die in Fig. 2B dargestellten Fälle jeweils der Verlauf der Restechodämpfung in Abhängigkeit von der Koeffizienten- oder Tap-Anzahl des Echokompensators 10 dargestellt. Aus Fig. 2C ist ersichtlich, daß mit jedem der obigen digitalen Vorfilter 15 eine deutliche Reduzierung der erforderlichen Koeffizientenanzahl des Echokompensators 10 erzielt werden kann, wobei am vorteilhaftesten das System mit der Übertragungsfunktion $H3(z) = \left(1-z^{-1}\right)^{2}$ (Kennlinie d) ist, die gegenüber dem Fall ohne Empfangssignalfilterung (Kennlinie e) eine Reduzierung der Koeffizientenanzahl von 560 (vgl auch Fig. 7B) auf etwa 200 ermöglicht.

In der nachfolgenden Tabelle ist die für eine Restechodämpfung von -80dB jeweils benötigten Länge des Echokompensators 10 in Bezug auf die in Fig. 1 gezeigten Anordnung für die oben angegebenen Übertragungsfunktionen H1(z) und H2(z) der digitalen Filter 11 und 12 dargestellt, wobei ersichtlich ist, daß eine deutliche Reduzierung der erforderlichen Länge des Echokompensators bereits erzielt werden kann, wenn ein digitales Filter entweder in den Echokompensationspfad oder in den Empfangssignalpfad eingefügt wird. Die .besten Ergebnisse werden bei Einfügen von digitalen Filtern sowohl in den Echokompensationspfad als auch in den Empfangssignalpfad erzielt.

| Digitales Filter im Empfangssignalpfad | Ohne Vorfilter im Echokompensations-pfad (Stand der Technik) | Zwei digitale Fil-ter im Echokompen-sationspfad mit zwei Unterabtas-tungsstufen |
|---|---|---|
| Ohne | 560 | 80 |
| $H3(z) = \left(1 - z^{-1}\right)$ | 303 | 70 |
| $H3(z) = \left(\dfrac{1 - z^{-1}}{1 - 0{,}5 \cdot z^{-1}}\right)^{2}$ | 281 | 70 |
| $H3(z) = \left(\dfrac{1 - z^{-1}}{1 - 0{,}25 \cdot z^{-1}}\right)^{2}$ | 236 | 55 |
| $H3(z) = \left(1 - z^{-1}\right)^{2}$ | 200 | 40 |

Im Gegensatz zum Upstream-Empfang der in Fig. 5 gezeigten zentralen Kommunikationseinheit 1 wird beim Downstream-Empfang der Teilnehmer-Kommunikationseinheit 2 das Empfangssignal mit einer um den Faktor w höheren Taktfrequenz abgetastet als das über einen D/A-Wandler ausgegebene Sendesignal. In diesem Fall muß daher der Echokompensator 10 an seinem Ausgang für das Echokompensationssignal w Abtastwerte pro Sendesymbol generieren, um das Echokompensationssignal von dem Empfangssignal subtrahieren zu können.

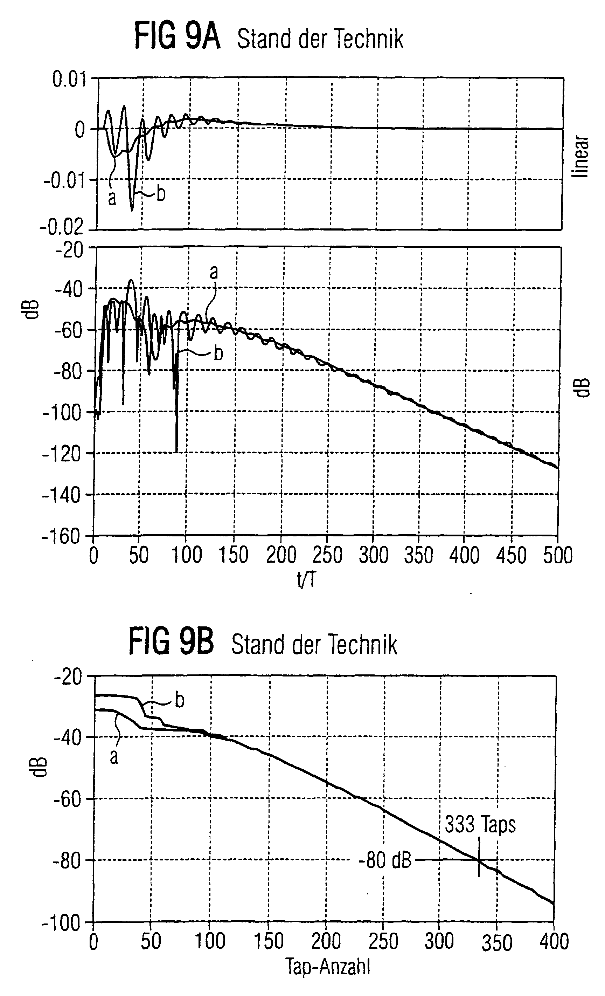

In Fig. 8 ist ein Blockschaltbild für einen entsprechenden Echokompensator 10 dargestellt. Der Echokompensator ist wieder als nichtrekursives digitales Filter ausgestaltet, umfaßt in diesem Fall jedoch w Filterkoeffizientensätze $h_{i,1}...h_{i,w,}$ wobei ein Koeffizientensatz für jeweils einen Abtastwert des Echokompensationssignal pro Sendesymbol vorgesehen ist. Am Ausgang des Echokompensators wird mit der höheren Abtastfrequenz des Empfangssignals zwischen den einzelnen Ausgangswerten der einzelnen Koeffizientensätze umgeschaltet, so daß für das Echokompensationssignal yec(k) pro Sendesymbol y(wk) w Abtastsymbole erzeugt werden.

Auch beim Downstream-Empfang wird die zur Erzielung einer bestimmten Restechodämpfung erforderliche Koeffizientenanzahl des Echokompensators 10 und somit dessen Realisierungsaufwand durch die zeitliche Länge der Echoimpulsantwort bestimmt. In Fig. 9A ist diesbezüglich die Echoimpulsantwort im Downstream-Empfänger eines ADSL-Übertragungssystems dargestellt, wobei sich die Kennlinie a auf eine CSA6 Loop-Übertragungsleitung ohne sogenannte "Bridge Taps" bezieht, während die Kennlinie einer ANSI Loop 13-Übertragungsleitung mit "Bridge Taps" entspricht. Insbesondere in den USA werden häufig Telefonleitungen zu Teilnehmern gelegt, die kurz vor dem Teilnehmer verzweigt werden, wobei an lediglich einem Ende der verzweigten Telefonleitung ein Endgerät angeschlossen wird. Die restlichen "blinden" Enden dieser Telefonleitung werden als "Bridge Taps" bezeichnet und haben in der Regel eine Beeinträchtigung der Leitungsimpedanz zur Folge.

Für dieselben Übertragungsleitungen ist in Fig. 9B mit den entsprechenden Kennlinien a und b die jeweils resultierende Restechodämpfung in Abhängigkeit von der Anzahl der Filterkoeffizienten des Echokompensators 10, d.h. in Abhängigkeit von der Tap-Anzahl, aufgetragen. Aus Fig. 9B ist ersichtlich, daß zur Erzielung einer Restechodämpfung von -80dB in beiden Fällen 333 Filterkoeffizienten des Echokompensators 10 erforderlich sind.

Zur Reduzierung des Realisierungsaufwands des Echokompensators 10 ist es sinnvoll, wegen der unterschiedlichen Abtastfrequenzen am Ein- und Ausgang des Echokompensators 10 analog zum Upstream-Empfänger in dem Echokompensationspfad jeweils ein digitales Teilfilter 11 bzw. 12 vor und nach dem Echokompensator 10 einzufügen. Eine entsprechende Echokompensationsanordnung für den Downstream-Empfänger ist in Fig. 3 dargestellt. Aus Fig. 3 ist auch ersichtlich, daß das Empfangssignal x(k) und das Echokompensationssignal yec(k) mit einer um den Faktor w höheren Abtastfrequenz (beispielsweise 2,2MHz) als das Sendesignal y(wk) (beispielsweise 276kHz) vorliegt. Wie bereits erwähnt worden ist, ist der Echokompensator 10 in diesem Fall analog zu Fig. 8 in Form einer Interpolationsstufe ausgestaltet, um am Ausgang die höhere Abtastfrequenz bereitzustellen.

Für die digitalen Filter 11 und 12 wurden mit Hilfe von Rechnersimulationen die folgenden Übertragungsfunktionen als besonders vorteilhaft ermittelt, um die Länge, d.h. die zur Erzielung einer bestimmten Restechodämpfung erforderliche Anzahl von Filterkoeffizienten, des als nichtrekursives Filter ausgestalteten Echokompensators 10 zu

reduzieren:

$$H1(z) = \left( \cfrac{1}{1 - \left( \cfrac{1}{4} \right) \cdot z^{-1}} \right) \cdot \left( \cfrac{\cdot 1}{1 - \left( \cfrac{5}{8} \right) \cdot z^{-1}} \right)$$

$$H2(z) = \left( \cfrac{1}{1 - \left( \cfrac{13}{16} \right) \cdot z^{-1}} \right)^2 \cdot \left( \cfrac{1}{1 + \left( \cfrac{3}{4} \right) \cdot z^{-1}} \right)^2$$

Obwohl dies in Fig. 3 nicht gezeigt ist, kann auch beim Downstream-Empfang eine weitere Reduzierung des Realisierungsaufwands des Echokompensators 10 erzielt werden, wenn analog zu Fig. 1 ein weiteres digitales Filter 15 in den Empfangssignalpfad eingefügt wird, wobei nachfolgend davon ausgegangen wird, daß dieses weitere digitale Filter 15 die Übertragungsfunktion

$$H3(z) = \frac{1}{2} \cdot \left( 1 - z^{-1} \right)$$

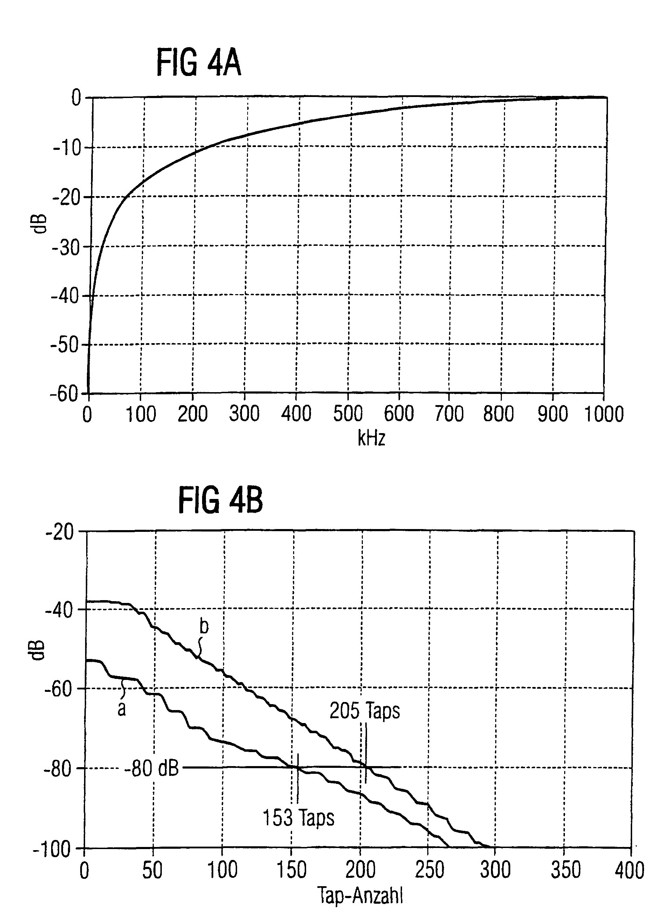

besitzt. In Fig. 4A ist der Betragsfrequenzgang dieses Filters 15 im logarithmischen Maßstab dargestellt.

In Fig. 4B ist der Verlauf der Restechodämpfung in Abhängigkeit von der Länge des Echokompensators 10, d.h. in Abhängigkeit von dessen Tap-Anzahl, für die beiden bereits betrachteten Übertragungsleitungen unter Berücksichtigung dieses digitalen Filters 15 in dem Empfangssignalpfad dargestellt. In beiden Fällen kann im Vergleich zu Fig. 9B durch das Einfügen des digitalen Filters 15 eine deutliche Reduzierung des Realisierungsaufwands des Echokompensators 10 erzielt werden, wobei zur Erzielung einer bestimmten Restechodämpfung (beispielsweise -80dB) im Vergleich zu der CSA6-Leitung (Kennlinie a) ein etwas längerer Echokompensator für die ANSI Loop 13-Leitung (Kennlinie b) erforderlich ist. Dies liegt offenbar an der bei der ANSI Loop 13-Leitung am Leitungsende vorhandenen Stichleitung am Empfängereingang.

In der nachfolgenden Tabelle sind die erforderlichen Längen des Echokompensators für die beiden betrachteten Leitungen mit und ohne Berücksichtigung der digitalen Teilfilter im Echokompensations- und Empfangssignalpfad zusammengefaßt, wobei im Empfangssignalpfad für das digitale Teilfilter 15 ein rekursives Filter mit der Übertragungsfunktion $H3(z) = (1-z^{-1})$ betrachtet wird. Dabei ist ersichtlich, daß eine deutliche Reduzierung der erforderlichen Länge des Echokompensators bereits erzielt werden kann, wenn ein digitales Filter entweder in den Echokompensationspfad oder in den Empfangssignalpfad eingefügt wird. Die besten Ergebnisse werden bei Einfügen von digitalen Filtern sowohl in den Echokompensationspfad als auch in den Empfangssignalpfad erzielt.

| Digitales Filter im Empfangssignalpfad | CSA6 Loop-Leitung | | ANSI-Loop 13-Leitung | |
|---|---|---|---|---|
| | ohne digitales Filter im Kompensationspfad | mit zwei digitalen Filtern im Kompensationspfad | ohne digitales Filter im Kompensationspfad | mit zwei digitalen Filtern im Kompensationspfad |
| Ohne | 333 | 140 | 333 | 172 |
| $H3(z) = \left(1 - z^{-1}\right)$ | 153 | 73 | 205 | 142 |

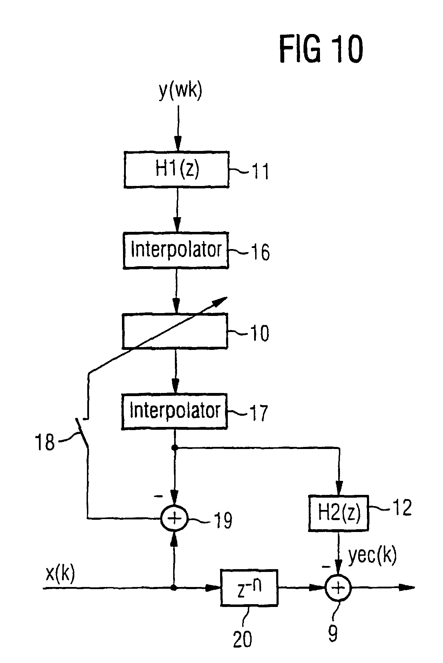

Wie bereits erwähnt worden ist, ist der Echokompensator 10 in der Regel durch ein adaptives nichtrekursives Filter gebildet. Beim Downstream-Empfang, d.h. im teilnehmerseitigen Empfänger, wird der Echokompensator bzw. das adaptive nichtrekursive Filter auf der hohen Datenrate betrieben, wodurch sich eine große Anzahl an Filterkoeffizienten und eine entsprechend große Anzahl an Multiplikationen pro Zeiteinheit dieses adaptiven Filters ergibt. Nachfolgend soll unter Bezugnahme auf Fig. 10 ein weiteres Ausführungsbeispiel der vorliegenden Erfindung erläutert werden, mit dem dieses Problem gelöst werden kann.

Bei dem in Fig. 10 dargestellten Ausführungsbeispiel wird die niedrigere Datenrate des Sendesignals stufenweise expandiert, wodurch es möglich ist, ein mit hoher Datenrate arbeitendes System mit unbekannter Übertragungsfunktion, nämlich den Echosignalpfad, durch das bei diesem Ausführungsbeispiel mit niedrigerer Datenrate arbeitende adaptive nichtrekursive Filter (FIR-Filter) des Echokompensators 10 derart nachzubilden, daß der Erwartungswert der quadratischen Differenz zwischen dem Echo- oder Empfangssignal x(k) und dem Echokompensationssignal bzw. Echoschätzwert yec(k) minimiert wird.

Zu diesem Zweck ist gemäß Fig. 10 ein erster Interpolator 16 vor den Echokompensator 10 und ein zweiter Interpolator 17 nach den Echokompensator 10 geschaltet. Mit Hilfe der beiden Interpolatoren 16 und 17 wird die gegenüber dem Echo- oder Empfangssignal x(k) beispielsweise um den Faktor w = 8 niedrigere Datenrate des Sendesignals y(wk) stufenweise erhöht bzw. expandiert. Mit Hilfe eines Addierers 19 wird die Differenz zwischen dem Empfangssignal x(k) und dem Ausgangssignal des Interpolators 17 gebildet, um den Interpolationsfehler beispielsweise über einen LMS-Algorithmus ("Least Mean Square") im quadratischen Mittel zu minimieren (beispielsweise durch Anwendung des sehr effizienten implementierbaren Vorzeichenalgorithmus). Mit Hilfe eines Unterabtasters oder Dezimierers 18 wird die Datenrate bzw. Abtastfrequenz dieses Differenz- oder Fehlersignals an die Datenrate des Echokompensators 10 angepaßt. Das von dem Addierer 19 generierte Differenz- oder Fehlersignal dient zur adaptiven Einstellung des den Echokompensator 10 bildenden nichtrekursiven Filters. Da dieses Fehlersignal nach der Datenratenkompression des Unterabtasters 18 die gleichen statistischen Eigenschaften aufweist wie der zu minimierende Ausgangs- oder Interpolationsfehler, muß im stationären Zustand auch der Interpolationsfehler minimal sein.

Wie bei den zuvor beschriebenen Ausführungsbeispielen sind in dem Echokompensationspfad zwei feste, d. h. nichtadaptive digitale Filter 11 oder 12, insbesondere IIR-Filter, vorgesehen. Dabei ist das digitale Filter 12 nicht in der Adaptionsschleife angeordnet, so daß die zuvor erwähnte Regelung des adaptiven nichtrekursiven Filters des Echokompensators 10 nicht über dieses digitale Filter erfolgt. Mit Hilfe des digitalen Filters 11 kann wie beschrieben die für den Echokompensator 10 benötigte Anzahl von Filterkoeffizienten weiter reduziert werden, da sich die Impulsantworten der unterschiedlichen Echopfade im niederfrequenten Bereich bezüglich ihres Rekursivanteils gleich verhalten.

Das Echo- oder Empfangssignal x(k) ist dem bereits zuvor erwähnten Addierer 9 über ein Verzögerungsglied 20 zugeführt, wobei das Verzögerungsglied 20 insbesondere zwischen dem Addierer 9 und dem Addierer 19 angeordnet ist.

Wird von einer Filterordnung N-1 des adaptiven nichtrekursiven Filters des Echokompensators 10 ausgegangen, werden für das adaptive nichtrekursive Filter N Filterkoeffizienten und N/M Multiplikationen für die Berechnung der Faltungssumme benötigt, da durch die Expansion um den Faktor M zwischen jeweils zwei Abtastwerten M-1 Nullstellen durch die Interpolatoren 16 und 17 eingefügt werden. Inwieweit die Datenrate für das adaptive nichtrekursive Filter des Echokompensators 10 reduziert werden kann, hängt einerseits von den Frequenzgängen der Echoimpulsantworten und andererseits von der Möglichkeit, nach einer Expansion der Datenrate aus dem Frequenzspektrum die entstandenen Spiegelanteile herauszufiltern, ab.

Für ein ADSL-System, bei dem das Sendesignal y(wk) beispielsweise mit der Datenrate oder Frequenz von 276 kHz vorliegt, während das Echo- oder Empfangssignal x(k) mit der hohen Datenrate von 2,2 MHz vorliegt (w = 8), kann die Datenrate von dem Interpolator 16 beispielsweise gemäß dem Verhältnis 1:4 und von dem Interpolator 17 gemäß dem Verhältnis 1:2 erhöht werden, während der Unterabtaster 18 entsprechend die Datenrate gemäß dem Verhältnis 2:1 reduziert. Das Verzögerungsglied 20 weist bei diesem Ausführungsbeispiel die Übertragungsfunktion $z^{-2}$ auf. Bei diesem konkreten Ausführungsbeispiel kann somit das adaptive nichtrekursive Filter des Echokompensators 10 auf einer Datenrate betrieben werden, welche der halben Datenrate des Empfangssignals x(k) entspricht, so daß entsprechend die für das adaptive nichtrekursive Filter des Echokompensators 10 benötigte Filterkoeffizientenanzahl halbiert wird. Da die Datenrate nach dem Echokompensator 10 um den Faktor 2 erhöht wird, wird das digitale Filter 12 eingesetzt, um die dadurch entstandenen Spiegelanteile aus dem Frequenzspektrum herauszufiltern bzw. zu unterdrücken. Für das digitale Filter 12 kann insbesondere ein festes IIR-Filter vierter Ordnung verwendet werden, um die geforderte Restechodämpfung von -80 dB für die zuvor betrachteten Testsignalleitungen zu erhalten. Das digitale Filter 11 kann hingegen beispielsweise ein festes IIR-Filter erster Ordnung sein.

Die Berechnung der Faltungssumme durch das adaptive nichtrekursive Filter des Echokompensators 10 wird vorzugsweise mit schneller Faltung durchgeführt, wodurch sich für die Anzahl der durchzuführenden Multiplikationen eine weitere deutliche Reduzierung ergibt.

Mit Hilfe des zuvor anhand Fig. 10 beschriebenen Ausführungsbeispiels kann die Anzahl der für das adaptive nichtrekursive Filter des Echokompensators 10 benötigten Filterkoeffizienten gegenüber dem herkömmlichen Stand der Technik von 560 auf 160 reduziert werden. Die Anzahl der durchzuführenden Multiplikationen kann von $154 \cdot 10^6$ auf $22 \cdot 10^6$ und die Anzahl der pro Zeiteinheit durchzuführenden Multiplikationen von 70 auf 20 reduziert werden.

**Patentansprüche**

1. Echokompensationsvorrichtung für Übertragungssysteme mit in Senderichtung um einen bestimmten Faktor höheren Dantenraten als in Empfangsrichtung mit einem in einem Echokompensationspfad angeordneten Echokompensator (10) zur Erzeugung eines digitalen Echokompensationssignals (yec) in Abhängigkeit von einem digitalen Sendesignal (y), und mit Signalkombiniermitteln (9) zur Kombination des Echokompensationssignals (yec) mit einem digitalen Empfangssignal (x), um somit ein echokompensiertes Empfangssignal zu erhalten,
   wobei der über den Echokompensator (10) zu den Signalkombiniermitteln (9) führende Echokompensationspfad vor dem Echokompensator (10) eine erste digitale Filtereinrichtung (11) und eine erste Unterabtasteinrichtung (13) zur Unterabtastung des Sendesignals (y) aufweist, und
   wobei der über den Echokompensator (10) zu den Signalkombiniermitteln (9) führende Echokompensationspfad zwischen dem Echokompensator (10) und den Signalkombiniermitteln (9) eine zweite Unterabtasteinrichtung (14) zur Unterabtastung des Echokompensationssignals (yec) und eine zweite digitale Filtereinrichtung (12) zur Filterung des Echokompensationssignals (yec) aufweist.

2. Echokompensationsvorrichtung nach Anspruch 1,
   **dadurch gekennzeichnet,**
   **daß** die Übertragungsfunktionen (H1(z), H2(z)) der ersten und zweiten digitalen Filtereinrichtung (11, 12) derart gewählt sind, daß ihre Filterkoeffizienten durch Zweierpotenzen darstellbar sind, und
   **daß** die erste und zweite digitale Filtereinrichtung (11, 12) derart ausgestaltet sind, daß sie zur digitalen Filterung die Multiplikation mit den jeweiligen Filterkoeffizienten durch Bit-Verschiebeoperationen durchführen.

3. Echokompensationsvorrichtung nach Anspruch 1 oder 2,
   **dadurch gekennzeichnet,**
   **daß** die Übertragungsfunktion H1(z) der ersten digitalen Filtereinrichtung (11) dem Ausdruck

$$H1(z) = \left( \frac{1}{1 - \left( \frac{5}{8} \right) \cdot z^{-1}} \right)^6$$

und die Übertragungsfunktion H2(z) der zweiten digitalen Filtereinrichtung (12) dem Ausdruck

$$H2(z) = \left( \cfrac{1}{1 - \left(1 - \cfrac{1}{16} - \cfrac{1}{64}\right) \cdot z^{-1}} \right)$$

entspricht.

4. Echokompensationsvorrichtung nach einem der vorhergehenden Ansprüche,
   **dadurch gekennzeichnet,**
   **daß** die erste Unterabtasteinrichtung (13) eine Unterabtastung gemäß dem Verhältnis 4:1 und die zweite Unterabtasteinrichtung (14) eine Unterabtastung gemäß dem Verhältnis 2:1 durchführt.

5. Echokompensationsvorrichtung für Übertragungssysteme mit in Empfangsrichtung um einen bestimmten Faktor höheren Datenraten als in Senderichtung, mit einem in einem Echokompensationspfad angeordneten Echokompensator (10) zur Erzeugung eines digitalen Echokompensationssignals (yec) in Abhängigkeit von einem digitalen Sendesignal (y), und
   mit Signalkombiniermitteln (9) zur Kombination des Echokompensationssignals (yec) mit einem digitalen Empfangssignal (x), um somit ein echokompensiertes Empfangssignal zu erhalten,
   wobei der über den Echokompensator (10) zu den Signalkombiniermitteln (9) führende Echokompensationspfad vor dem Echokompensator (10) eine erste digitale Filtereinrichtung (11) zur Filterung des Sendesignals (y) und ein erstes Mittel (16) zur Erhöhung der Datenrate aufweist, und
   wobei der über den Echokompensator (10) zu den Signalkombiniermitteln (9) führende Echokompensationspfad zwischen dem Echokompensator (10) und den Signalkombiniermitteln (9) ein zweites Mittel (17) zur Erhöhung der Datenrate, um den Signalkombiniermitteln (9) das Echokompensationssignal (yec) mit der Datenrate des Empfangssignals (x) zuzuführen, und eine zweite digitale Filtereinrichtung (12) zur Filterung des Echokompensationssignals (yec) aufweist.

6. Echokompensationsvorrichtung nach Anspruch 5,
   **dadurch gekennzeichnet,**
   **daß** die Übertragungsfunktion H1(z) der ersten digitalen Filtereinrichtung (11) dem Ausdruck

$$H1(z) = \left( \cfrac{1}{1 - \left(\cfrac{1}{4}\right) \cdot z^{-1}} \right) \cdot \left( \cfrac{1}{1 + \left(\cfrac{5}{8}\right) \cdot z^{-1}} \right)$$

und die Übertragungsfunktion H2(z) der zweiten digitalen Filtereinrichtung (12) dem Ausdruck

$$H2(z) = \left( \cfrac{1}{1 - \left(\cfrac{13}{16}\right) \cdot z^{-1}} \right)^2 \cdot \left( \cfrac{1}{1 + \left(\cfrac{3}{4}\right) \cdot z^{-1}} \right)^2$$

entspricht.

7. Echokompensationsvorrichtung nach Anpruch 5 oder 6,
   **dadurch gekennzeichnet,**
   **daß** der Echokompensator (10) in Form eines nichtrekursiven Filters derart ausgestaltet ist, daß er das Echokompensationssignal (yec) mit einer um einen bestimmten Faktor (w) höheren Datenrate als das Sendesignal (y) erzeugt, indem eine dem Wert des bestimmten Faktors entsprechende Anzahl an unterschiedlichen Filterkoeffizientensätze vorhanden sind, zwischen deren Ausgangswerte mit einer der höheren Datenrate entsprechenden Abtastfrequenz umgeschaltet wird, so daß jeweils ein Filterkoeffizientensatz für einen Abtastwert je Sendesymbol (y) vorhanden ist.

8. Echokompensationsvorrichtung nach einem der Ansprüche 5-7,
**dadurch gekennzeichnet,**
**daß** der Echokompensator (10) in Form eines adaptiven nichtrekursiven Filters ausgestaltet ist, und
**daß** dem adaptiven nichtrekursiven Filters des Echokompensators (10) zur adaptiven Einstellung ein Differenzsignal zwischen dem Empfangssignal (x) und dem Ausgangssignal des Mittels (17) zur Erhöhung der Datenrate über eine Unterabtasteinrichtung (18) zugeführt ist.

9. Echokompensationsvorrichtung nach einem der Ansprüche 5-8,
**dadurch gekennzeichnet,**
**daß** das dem Echokompensator (10) vorgeschaltete erste Mittel (16) zur Erhöhung der Datenrate die Datenrate um den Faktor 4 erhöht, während das dem Echokompensator (10) nachgeschaltete zweite Mittel (17) zur Erhöhung der Datenrate die Datenrate um den Faktor 2 erhöht.

10. Echokompensationsvorrichtung nach einem der Ansprüche 5-9,
**dadurch gekennzeichnet,**
**daß** die erste digitale Filtereinrichtung (11) in Form eines rekursiven digitalen Filters erster Ordnung ausgestaltet ist, während die zweite digitale Filtereinrichtung (12) in Form eines rekursiven digitalen Filters vierter Ordnung ausgestaltet ist.

11. Echokompensationsvorrichtung nach einem der vorhergehenden Ansprüche,
**dadurch gekennzeichnet,**
**daß** eine digitale Filtereinrichtung (15) zur Filterung des Empfangssignals (x) vor dessen Kombination mit dem Echokompensationssignal (yec) durch die Signalkombiniermittel (9) vorhanden ist.

12. Echokompensationsvorrichtung nach Anspruch 11,
**dadurch gekennzeichnet,**
**daß** die Übertragungsfunktion H3(z) der zur Filterung des Empfangssignals (x) vorhandenen digitalen Filtereinrichtung (15) dem Ausdruck

$$H3(z) = \prod_{v=1}^{n}\left(\frac{1-z^{-1}}{1-c_v \cdot z^{-1}}\right) \text{ mit } c_v = \pm\left(1 - 2^{-L_v}\right)$$

entspricht, wobei $L_v$ eine ganze Zahl ist.

13. Echokompensationsvorrichtung nach Anspruch 11 oder 12 und einem der Ansprüche 1-4,
**dadurch gekennzeichnet,**
**daß** die Übertragungsfunktion H3(z) der zur Filterung des Empfangssignals (x) vorhandenen digitalen Filtereinrichtung (15) dem Ausdruck

$$H3(z) = \left(1-z^{-1}\right), \quad H3(z) = \left(\frac{1-z^{-1}}{1-0,5 \cdot z^{-1}}\right)^2, \quad H3(z) = \left(\frac{1-z^{-1}}{1-0,25 \cdot z^{-1}}\right)^2$$

oder $H3(z) = (1-z^{-1})^2$ entspricht.

14. Echokompensationsvorrichtung nach Anspruch 11 oder 12 und einem der Ansprüche 5-10,
**dadurch gekennzeichnet,**
**daß** die Übertragungsfunktion H3(z) der zur Filterung des Empfangssignals (x) vorhandenen digitalen Filtereinrichtung (15) dem Ausdruck

$$H3(z) = \left(1 - z^{-1}\right) \quad \text{oder} \quad H3(z) = \frac{1}{2} \cdot \left(1 - z^{-1}\right)$$

oder entspricht.

**15.** Duplex-Übertragungssystem,
mit einer ersten Kommunikationseinheit (1) und einer zweiten Kommunikationseinheit (2), und
mit einem Übertragungskanal (3) zur bidirektionalen Übertragung von Daten zwischen der ersten und zweiten
Kommunikationseinheit (1, 2), wobei die Datenübertragung von der ersten Kommunikationseinheit (1) zu der zweiten Kommunikationseinheit (2) mit einer höheren Datenrate (fs) als in umgekehrter Richtung erfolgt,
**dadurch gekennzeichnet,**
**daß** die erste Kommunikationseinheit (1) eine Echokompensationsvorrichtung nach einem der Ansprüche 1-4 oder
11-13 und die zweite Kommunikationseinheit (2) eine Echokompensationsvorrichtung nach einem der Ansprüche
5-10 oder 14 aufweist.

**16.** Duplex-Übertragungssystem nach Anspruch 15,
**dadurch gekennzeichnet,**
**daß** das Duplex-Übertragungssystem ein ADSL-Übertragungssystem ist.

**Claims**

**1.** Echo compensation device for transmission systems with a data rate in the transmitting direction being higher by
a certain factor than in the receiving direction, with an echo compensator (10) arranged in an echo compensation
path for creating a digital echo compensation signal (yec) based upon a digital transmitted signal (y), and with
signal combination means (9) for combining the echo compensation signal (yec) with a digital received signal (x),
in order to obtain an echo-compensated received signal, wherein the echo compensation path leading via the echo
compensator (10) to the signal combination means (9) has a first digital filter device (11) and a first sub-sampling
device (13) for sub-sampling the transmitted signal (y) before the echo compensator (10), and wherein the echo
compensation path leading via the echo compensator (10) to the signal combination means (9) has between the
echo compensator (10) and the signal combination means (9) a second sub-sampling device (14) for sub-sampling
the echo compensation signal (yec) and a second digital filter device (12) for filtering the echo compensation signal
(yec).

**2.** Echo compensation device according to claim 1,
**characterised in that**
the transmission functions (H1 (z)), (H2 (z)) of the first and second digital filter devices (11, 12) are selected in
such a way that their filter coefficients are described by powers of two, and
the first and second digital filter devices (11, 12) are designed in such a way that they perform the multiplication
with the particular filter coefficients by bit shift operations for digital filtration.

**3.** Echo compensation device according to claim 1 or 2,
**characterised in that**
the transmission function H1(z) of
the first digital filter device (11) corresponds to the expression

$$H1(z) = \left( \frac{1}{1 - \left(\frac{5}{8}\right) \cdot z^{-1}} \right)^6$$

and the transmission function H2(z) of the second digital filter device (12) corresponds to the expression

$$H2(z) = \left( \cfrac{1}{1 - \left(1 - \cfrac{1}{16} - \cfrac{1}{64}\right) \cdot z^{-1}} \right)$$

4. Echo compensation device according to any one of the preceding claims,
**characterised in that**
the first sub-sampling device (13) carries out sub-sampling according to the ratio 4 : 1 and the second sub-sampling device (14) sub-sampling according to the ratio 2 : 1.

5. Echo compensation device for transmission systems with a data rate in the receiving direction being by a certain factor higher than in the transmitting direction, with an echo compensator (10) arranged in an echo compensation path for creating a digital echo compensation signal (yec) base upon a digital transmitted signal (y), and with signal combination means (9) for combining the echo compensation signal (yec) with a digital received signal (x), in order to obtain an echo-compensated received signal, wherein the echo compensation path leading via the echo compensator (10) to the signal combination means (9) has a first digital filter device (11) for filtering the transmitted signal (y) and a first means (16) for increasing the data rate before the echo compensator (10), and wherein the echo compensation path leading via the echo compensator (10) to the signal combination means (9) has between the echo compensator (10) and the signal combination means (9) a second means (17) for increasing the data rate, in order to feed the echo compensation signal (yec) with the data rate of the received signal (x) to the signal combination means (9), and a second digital filter device (12) for filtering the echo compensation signal (yec).

6. Echo compensation device according to claim 5,
**characterised in that**
the transmission function H1(z) of the first digital filter device (11) corresponds to the expression

$$H1(z) = \left( \cfrac{1}{1 - \left(\cfrac{1}{4}\right) \cdot z^{-1}} \right) \cdot \left( \cfrac{1}{1 + \left(\cfrac{5}{8}\right) \cdot z^{-1}} \right)$$

and the transmission function H2(z) of the second digital filter device (12) corresponds to the expression

$$H2(z) = \left( \cfrac{1}{1 - \left(\cfrac{13}{16}\right) \cdot z^{-1}} \right)^{2} \cdot \left( \cfrac{1}{1 + \left(\cfrac{3}{4}\right) \cdot z^{-1}} \right)^{2}$$

7. Echo compensation device according to claim 5 or claim 6,
**characterised in that**
the echo compensator (10) is configured in the form of a non-recursive filter in such a way that it creates the echo compensation signal (yec) at a data rate higher by a certain factor (w) than the transmitted signal, with a number corresponding to the value of the certain factor of various filter coefficient rates being provided, between the output values of which switching takes place at a sampling frequency corresponding to the higher data rate, so that in each case a filter coefficient rate is provided for a sampling value for each transmission symbol (y).

8. Echo compensation device according to any one of claims 5-7,

**characterised in that**
the echo compensator (10) is configured in the form of an adaptive non recursive filter, and
for adaptive adjustment a differential signal between the received signal (x) and the transmitted signal of the means
to increase the data rate (17) via a sub-sampling device (18) is fed to the adaptive non-recursive filter of the echo
compensator (10).

9.  Echo compensation device according to any one of claims 5-8,
    **characterised in that**
    the first means (16) to increase the data rate inserted before the echo compensator (10) increases the data rate
    by the factor 4, while the second means (17) to increase the data rate inserted after the echo compensator (10)
    increases the data rate by the factor 2.

10. Echo compensation device according to any one of claims 5-9,
    **characterised in that**
    the first digital filter device (11) is configured in the form of a recursive digital filter of the first level, while the second
    digital filter device (12) is configured in the form of a recursive digital filter of the fourth level.

11. Echo compensation device according to any one of the preceding claims,
    **characterised in that** a digital filter device (15) is provided for filtering the received signal (x) before it is combined
    with the echo compensation signal (yec) by the signal combination means (9).

12. Echo compensation device according to claim 11,
    **characterised in that**
    the transmission function H3(z) of the digital filter device (15) provided for filtering the received signal (x) corre-
    sponds to the expression

$$H3(z) = \prod_{v=1}^{n}\left( \frac{1-z^{-1}}{1-c_v \cdot z^{-1}} \right) \text{with } c_v = \pm\left(1 - 2^{-Lv}\right)$$

whereby $L_v$ is an integer.

13. Echo compensation device according to claim 11 or claim 12 and any one of claims 1-4,
    **characterised in that**
    the transmission function H3(z) of the digital filter device (15) provided for filtering the received signal (x) corre-
    sponds to the expression

$$H3(z) = \left(1 - z^{-1}\right),$$

$$H3(z) = \left( \frac{1-z^{-1}}{1-0.5 \cdot z^{-1}} \right)^2, \quad H3(z) = \left( \frac{1-z^{-1}}{1-0.25 \cdot z^{-1}} \right)^2 \quad \text{or} \quad H3(z) = \left(1 - z^{-1}\right)^2.$$

14. Echo compensation device according to claim 11 or claim 12 and any one of claims 5-10,
    **characterised in that**
    the transmission function H3(z) of the digital filter device (15) provided for filtering the received signal (x) corre-
    sponds to the expression

$$H3(z) = \left(1 - z^{-1}\right) \quad \text{or} \quad H3(z) = \frac{1}{2} \cdot \left(1 - z^{-1}\right)$$

**15.** Duplex transmission system,
with a first communication unit (1) and a second communication unit (2), and
with a transmission channel (3) for bi-directional transmission of data between the first and second communication unit (1, 2), whereby the data of the first communication unit (1) is transmitted to the second communication unit (2) at a higher data rate (fs) than in the reverse direction,
**characterised in that**
the first communication unit (1) has an echo compensation device according to any one of claims 1-4 or 11-13 and the second communication unit (2) has an echo compensation device according to any one of claims 5-10 or 14.

**16.** Duplex transmission system according to claim 15,
**characterised in that**
the duplex transmission system is an ADSL transmission system.

**Revendications**

**1.** Dispositif de compensation d'écho pour des systèmes de transmission avec des débits binaires plus élevés d'un facteur défini dans le sens d'émission que dans le sens de réception, comprenant un compensateur d'écho (10) disposé dans un chemin de compensation d'écho pour la génération d'un signal numérique de compensation d'écho (yec) en fonction d'un signal numérique d'émission (y), et comprenant des moyens de combinaison de signaux (9) pour la combinaison du signal de compensation d'écho (yec) avec un signal numérique de réception (x), afin d'obtenir ainsi un signal de réception compensé en écho, le chemin de compensation d'écho, qui mène par le compensateur d'écho (10) aux moyens de combinaison de signaux (9), présentant avant le compensateur d'écho (10), un premier filtre numérique (11) et un premier appareil de sous-balayage (13) pour le sous-balayage du signal d'émission (y), et le chemin de compensation d'écho, qui mène par le compensateur d'écho (10) aux moyens de combinaison de signaux (9), présentant entre le compensateur d'écho (10) et les moyens de combinaison de signaux (9), un second appareil de sous-balayage (14) pour le sous-balayage du signal de compensation d'écho (yec) et un second filtre numérique (12) pour le filtrage du signal de compensation d'écho (yec).

**2.** Dispositif de compensation d'écho selon la revendication 1, **caractérisé en ce que** les fonctions de transmission (H1(z), H2(z)) des premier et second filtres numériques (11, 12) sont choisies de telle sorte que leurs coefficients de filtrage puissent être représentés par des puissances de deux et **en ce que** les premier et second filtres numériques (11, 12) sont conçus de telle sorte qu'ils effectuent pour le filtrage numérique, la multiplication avec les coefficients de filtrage respectifs par des opérations de décalage de bit.

**3.** Dispositif de compensation d'écho selon la revendication 1 ou 2, **caractérisé en ce que** la fonction de transmission H1(z) du premier filtre numérique (11) correspond à l'expression

$$H1(z) = \left( \frac{1}{1 - \left(\frac{5}{8}\right).z^{-1}} \right)^{6}$$

et la fonction de transmission H2(z) du second filtre numérique (12) correspond à l'expression

$$H2(z) = \left( \frac{1}{1 - \left(1 - \frac{1}{16} - \frac{1}{64}\right).z^{-1}} \right).$$

**4.** Dispositif de compensation d'écho selon l'une des revendications précédentes, **caractérisé en ce que** le premier appareil de sous-balayage (13) effectue un sous-balayage selon le rapport 4:1 et le second appareil de sous-balayage (14) un sous-balayage selon le rapport 2:1.

**5.** Dispositif de compensation d'écho pour des systèmes de transmission avec des débits binaires plus élevés d'un facteur défini dans le sens de réception que dans le sens d'émission, comprenant un compensateur d'écho (10) disposé dans un chemin de compensation d'écho pour la génération d'un signal numérique de compensation d'écho (yec) en fonction d'un signal numérique d'émission (y) et des moyens de combinaison de signaux (9) pour la combinaison du signal de compensation d'écho (yec) avec un signal numérique de réception (x), afin d'obtenir ainsi un signal de réception compensé en écho, le chemin de compensation d'écho, qui mène par le compensateur d'écho (10) aux moyens de combinaison de signaux (9), présentant avant le compensateur d'écho (10) un premier filtre numérique (11) pour le filtrage du signal d'émission (y) et un premier moyen (16) pour l'augmentation du débit binaire, et le chemin de compensation d'écho, qui mène par le compensateur d'écho (10) aux moyens de combinaison de signaux (9), présentant entre le compensateur d'écho (10) et les moyens de combinaison de signaux (9), un second moyen (17) pour l'augmentation du débit binaire, afin d'amener aux moyens de combinaison de signaux (9) le signal de compensation d'écho (yec) avec le débit binaire du signal de réception (x), et un second filtre numérique (12) pour le filtrage du signal de compensation d'écho (yec).

**6.** Dispositif de compensation d'écho selon la revendication 5, **caractérisé en ce que** la fonction de transmission H1(z) du premier filtre numérique (11) correspond à l'expression

$$H1(z) = \left( \frac{1}{1 - \left(\frac{1}{4}\right).z^{-1}} \right)\left( \frac{1}{1 + \left(\frac{5}{8}\right).z^{-1}} \right)$$

et la fonction de transmission H2(z) du second filtre numérique (12) correspond à l'expression

$$H2(z) = \left( \frac{1}{1 - \left(\frac{13}{16}\right).z^{-1}} \right)^2 . \left( \frac{1}{1 + \left(\frac{3}{4}\right).z^{-1}} \right)^2 .$$

**7.** Dispositif de compensation d'écho selon la revendication 5 ou 6, **caractérisé en ce que** le compensateur d'écho (10) est conçu sous la forme d'un filtre non récursif de telle sorte qu'il génère le signal de compensation d'écho (yec) avec un débit binaire plus élevé d'un facteur défini (w) que le signal d'émission (y) par le fait qu'un nombre, correspondant à la valeur du facteur défini, de séries différentes de coefficients de filtrage est présent, séries entre les valeurs de sortie desquelles on commute avec une fréquence de balayage correspondant au débit binaire plus élevé, de sorte que respectivement une série de coefficients de filtrage est présente pour une valeur de balayage par symbole d'émission (y).

**8.** Dispositif de compensation d'écho selon l'une des revendications 5 à 7, **caractérisé en ce que** le compensateur d'écho (10) est conçu sous la forme d'un filtre adaptatif et non récursif, et **en ce qu'**un signal de différence entre le signal de réception (x) et le signal de sortie du moyen (17) pour l'augmentation du débit binaire, est amené au filtre adaptatif et non récursif du compensateur d'écho (10) pour le réglage adaptatif au moyen d'un appareil de sous-balayage (18).

**9.** Dispositif de compensation d'écho selon l'une des revendications 5 à 8, **caractérisé en ce que** le premier moyen (16) pour l'augmentation du débit binaire, placé en amont du compensateur d'écho (10), augmente le débit binaire du facteur 4, alors que le second moyen (17) pour l'augmentation du débit binaire, placé en aval du compensateur d'écho (10) augmente le débit binaire du facteur 2.

10. Dispositif de compensation d'écho selon l'une des revendications 5 à 9, **caractérisé en ce que** le premier filtre numérique (11) est conçu sous la forme d'un filtre numérique récursif de premier ordre, alors que le second filtre numérique (12) est conçu sous la forme d'un filtre numérique récursif de quatrième ordre.

11. Dispositif de compensation d'écho selon l'une des revendications précédentes, **caractérisé en ce qu'**un filtre numérique (15) est présent pour le filtrage du signal de réception (x) avant sa combinaison avec le signal de compensation d'écho (yec) par les moyens de combinaison de signaux (9).

12. Dispositif de compensation d'écho selon la revendication 11, **caractérisé en ce que** la fonction de transmission H3(z) du filtre numérique (15) présent pour le filtrage du signal de réception (x) correspond à l'expression

$$H3(z) = \prod_{v=1}^{n}\left(\frac{1-z^{-1}}{1-c_v.z^{-1}}\right) \quad \text{avec} \quad c_v = \pm\left(1-2^{-L_v}\right)$$

$L_v$ étant un nombre entier.

13. Dispositif de compensation d'écho selon la revendication 11 ou 12 et l'une des revendications 1 à 4, **caractérisé en ce que** la fonction de transmission H3(z) du filtre numérique (15) présent pour le filtrage du signal de réception (x) correspond à l'expression

$$H3(z) = \left(1-z^{-1}\right),$$

$$H3(z) = \left(\frac{1-z^{-1}}{1-0,5.z^{-1}}\right)^2, \qquad H3(z) = \left(\frac{1-z^{-1}}{1-0,25.z^{-1}}\right)^2$$

ou

$$H3(z) = (1-z^{-1})^2.$$

14. Dispositif de compensation d'écho selon la revendication 11 ou 12 et l'une des revendications 5 à 10, **caractérisé en ce que** la fonction de transmission H3(z) du filtre numérique (15) présent pour le filtrage du signal de réception (x) correspond à l'expression

$$H3(z) = \left(1-z^{-1}\right) \text{ ou } H3(z) = \frac{1}{2}.\left(1-z^{-1}\right).$$

15. Système de transmission en duplex, comprenant une première unité de communication (1) et une seconde unité de communication (2), et un canal de transmission (3) pour la transmission bidirectionnelle de données entre la première et la seconde unité de communication (1, 2), la transmission de données de la première unité de communication (1) à la seconde unité de communication (2) s'effectuant avec un débit binaire (fs) plus élevé que dans le sens inverse, **caractérisé en ce que** la première unité de communication (1) présente un dispositif de compensation d'écho selon l'une quelconque des revendications 1 à 4 ou 11 à 13 et la seconde unité de communication (2) un dispositif de compensation d'écho selon l'une des revendications 5 à 10 ou 14.

**16.** Système de transmission en duplex selon la revendication 15, **caractérisé en ce que** le système de transmission en duplex est un système de transmission ADSL.

# FIG 1

# FIG 2A

# FIG 2B

## FIG 2C

## FIG 3

## FIG 4A

## FIG 4B

# FIG 5

# FIG 6
## Stand der Technik

# FIG 8

EP 1 226 660 B1

## FIG 7A Stand der Technik

Anzahl der Abtastwerte

Anzahl der Abtastwerte

## FIG 7B Stand der Technik

560 Taps

-80 dB

Tap-Anzahl

26

## FIG 9A  Stand der Technik

## FIG 9B  Stand der Technik

# FIG 10

y(wk)

| H1(z) |—11

| Interpolator |—16

| |—10

| Interpolator |—17

18—

− 19

| H2(z) |—12

x(k)

− yec(k)

| z^{-n} |

20

9